# DEMANDE DE BREVET EUROPEEN

(11) **EP 0 579 521 A1**
(43) Date de publication de la demande: **19.01.1994**
(21) Numéro de dépôt: 93401646.0
(22) Date de dépôt: 25.06.1993
(51) Int. Cl.: G02B 6/25

(54) **Procédé et dispositif de clivage d'une fibre optique**

(30) Priorité: 17.07.1992 FR 9208829
(71) Demandeur: FRAMATOME CONNECTORS INTERNATIONAL, 92084 Paris La Défense (FR)
(72) Inventeur: Lincot, Christian, F-93160 Noisy le Grand (FR); Sane, Ousseynou, F-91000 Evry (FR)
(74) Mandataire: Keib, Gérard

(57) **Abrégé**

Le procédé consiste à : bloquer la fibre (1) entre deux points de maintien (2) appliquer, en chacun de deux appuis (20) situés d'un même côté de la fibre, un premier effort de poussée radiale (19) contraignant la fibre en flexion autour de chacun des deux appuis et, corrélativement, en traction (21) entre ces deux points ; appliquer, en un contre-appui (24) situé entre les deux appuis et du côté diamétralement opposé à ces derniers, un second effort de poussée radiale (23) déformant la fibre en contre-flexion et produisant ainsi dans la section de la fibre située au droit du contre-appui, par composition des contraintes de traction et de contre-flexion, un profil de contrainte croissant depuis une contrainte minimale du côté du contre-appui jusqu'a une contrainte maximale du côté diamétralement opposé ; et accroître ce second effort jusqu'à ce que cette contrainte maximale atteigne la limite de rupture élastique et provoque ainsi en cet endroit (25) un déchirement amorçant le clivage de la fibre.

## Description

L'invention concerne le clivage des fibres optiques.

Pour la réalisation d'une terminaison de fibre, la technique de clivage s'oppose à la technique de polissage qui, bien qu'elle permette d'obtenir des terminaisons de grande qualité, est complexe, longue et coûteuse à mettre en oeuvre, et est exclue lorsqu'il s'agit de réaliser une terminaison de fibre in situ.

A l'inverse, le clivage d'une fibre est une opération réalisée de façon quasi-instantanée, puisqu'il s'agit simplement de briser la fibre de telle sorte que le plan de fracture constitue la face terminale de la fibre, sans autre opération. Cette technique requiert cependant une très grande maîtrise du procédé, à la fois pour obtenir un état de surface satisfaisant (une qualité équivalente à celle d'un poli mécanique) et une très bonne précision géométrique de la fracture, en ce qui concerne aussi bien la position axiale sur la longueur de la fibre que l'orientation angulaire du plan de fracture par rapport à l'axe médian de la fibre.

Une première technique connue, dite score-and-break (rayer/briser) et décrite par exemple dans le US-A-4 621 754, consiste à réaliser le clivage par cassure après entaille préalable de la fibre, de la même manière que pour la découpe d'une vitre.

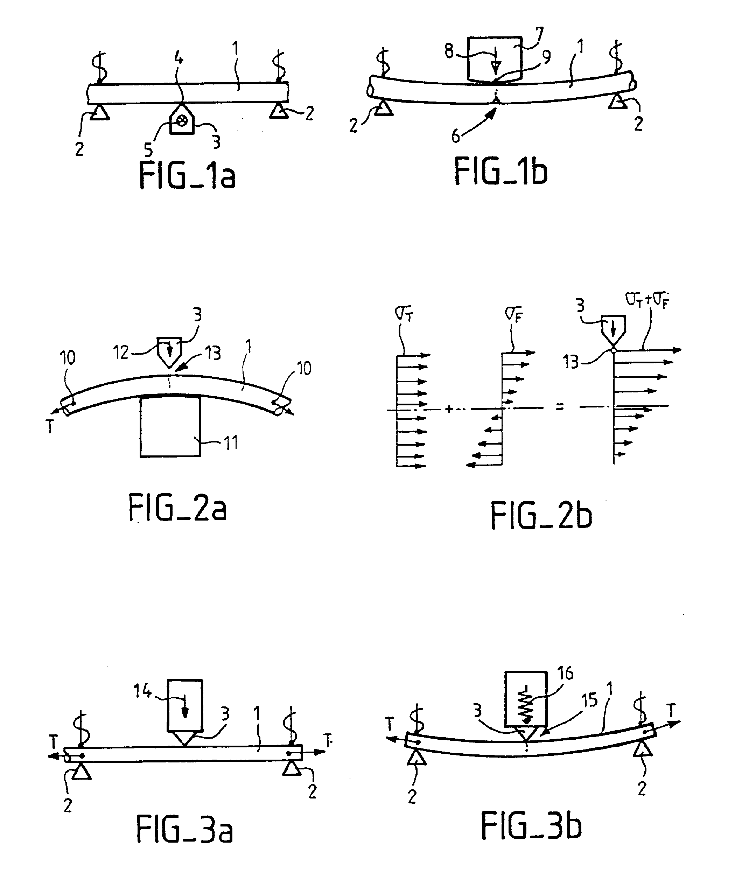

Ce principe est illustré figures 1a et 1b : tout d'abord (figure 1a) la fibre 1 est immobilisée par serrage radial en deux points de maintien 2 et un outil diamanté 3 produit une entaille 4 par déplacement perpendiculaire à l'axe de la fibre, selon la flèche 5 (c'est-à-dire perpendiculairement au plan de la figure). Dans une seconde étape, (figure 1 b), on exerce à l'opposé de l'emplacement 6 de l'entaille un effort radial sur la fibre au moyen d'un presseur 7 déplacé radialement, selon la flèche 8, de manière à exercer au point 9, diamétralement opposé au point d'entaille 6, un effort de flexion sur la fibre. Cet effort est progressivement accru jusqu'à provoquer la cassure de la fibre, cette cassure se propageant diamétralement à partir de l'amorce de rupture constituée par l'entaille 6.

Cette première technique est, en pratique, essentiellement utilisée en usine, car elle est surtout adaptée au clivage de fibres nues et requiert une précision de mise en oeuvre relativement élevée, nécessitant des conditions opératoires et d'environnement seulement compatibles avec une utilisation en atelier. On notera en outre que cette technique ne permet que le clivage à 90°, c'est-à-dire le clivage selon un plan strictement perpendiculaire à l'axe médian de la fibre (alors que, comme on l'expliquera plus loin, dans certains cas, il peut être avantageux de réaliser un clivage selon un plan légèrement incliné par rapport à ce plan perpendiculaire).

Une seconde technique connue, décrite par exemple dans le US-A-4 976 390 et illustrée figures 2a et 2b, consiste à opérer le clivage par impact sur la fibre.

A cet effet, comme illustré figure 2a, la fibre 1 est sollicitée en traction T en deux points 10 et mise en appui sur un galbe 11 de rayon constant, ce qui a pour effet de combiner traction et flexion. La composition des contraintes, illustrée figure 2b, montre que si l'on additionne algébriquement les contraintes de traction e_{T} et de flexion e_{F}, on obtient un profil de contrainte résultante 0 = e_{T} + e_{F} variant d'une valeur minimale (de préférence nulle) au point de contact avec le galbe 11 jusqu'à une valeur maximale au point 13 diamétralement opposé. Une fois la fibre sollicitée dans cet état de contrainte, on frappe alors le point 13 au moyen d'un couteau 3 déplacé dans la direction de la flèche 12 : cet effort brusque, appliqué dans la zone de contrainte maximale, provoque une pénétration du couteau dans le verre puis une propagation de la rupture dans le plan perpendiculaire à l'axe médian de la fibre.

Les difficultés de mise en oeuvre de cette technique tiennent surtout au fait que, le rayon de courbure du galbe 11 étant constant, l'effort de flexion est fixé par construction et que, dès lors, si l'on veut une contrainte nulle au point de contrainte minimal, on doit jouer sur l'effort de traction T pour ajuster l'état de contrainte au sein du matériau au profil souhaité, ce qui peut être délicat à obtenir. En outre, cette technique nécessite un ajustement précis, et difficile, de la vitesse d'impact du couteau 3 et de la profondeur de pénétration de celui-ci pour obtenir une qualité satisfaisante du plan de clivage. Enfin, comme dans le cas de la première technique, il n'est ici encore possible de produire par ce procédé que des clivage à 90°.

Une troisième technique connue, décrite par exemple dans le EP-A-0 245 109 et illustrée figures 3a et 3b, consiste, après avoir immobilisé la fibre entre deux points de maintien 2, à mettre celle-ci sous tension (effort de traction T) puis d'approcher de l'endroit où l'on veut réaliser le clivage un couteau 3 déplacé radialement (flèche 14). Le contact puis l'avancée de ce couteau 3 vont produire, comme illustré figure 3b, une flèche de la fibre au point de contact 15. On poursuit alors le mouvement du couteau, en émettant en outre des ultrasons au moyen d'un dispositif 16, et ceci jusqu'à provoquer la fracture de la fibre.

Cette troisième technique, qui consiste essentiellement à remplacer la flexion préalable de la seconde technique par une flexion sous l'effort de la pénétration du couteau et l'impact de ce couteau par une pénétration progressive avec application d'ultrasons, présente sensiblement, avec en outre une complexité accrue de mise en oeuvre, les mêmes inconvénients que les deux premières techniques exposées plus haut.

Une quatrième technique, décrite dans la demande de brevet JP-A-2 054 206 met en oeuvre une lame circulaire rotative venant entailler préalablement la fibre puis effectuer sa rupture par mise en butée sur un membre presseur. Des organes de maintien montés sur ressorts s'opposent au mouvement de poussée verticale de la lame circulaire. Cette quatrième technique présente les inconvénients des techniques mettant en oeuvre une entaille préalable.

C'est pour pallier ces divers inconvénients que la présente invention propose une nouvelle technique de clivage, basée sur un principe différent de celui des quatre techniques connues exposées plus haut, à savoir, par déchirement de la fibre sans création préalable d'amorce de rupture, et qui présente les avantages suivants :
- simplicité de mise en oeuvre, le clivage pouvant être opéré par un outil portatif tel qu'une pince à cliver ou une machine de table de structure très simple ;
- très grande précision de la fracture, en ce qui concerne à la fois la précision dimensionnelle le long de l'axe médian de la fibre et la précision angulaire de la face d'extrémité obtenue au clivage, et ceci malgré des moyens de mise en oeuvre qui, comme on le verra, sont de structure générale très simple ;
- excellente planéité de la surface de fracture, supérieure à ce qui était obtenu avec les procédés classiques ;
- possibilité d'obtenir une cassure biaise, c'est-à-dire une cassure selon un plan de fracture incliné de quelques degrés par rapport au plan perpendiculaire à l'axe moyen de la fibre.

Un tel clivage en biais permet en effet, dans certains connecteurs, des gains importants en ce qui concerne notamment la réflectance (atténuation du phénomène de rétroréflexion par la face d'extrémité de deux fibres mises bout à bout dans un connecteur) : ainsi, une coupe biaise selon un angle de 5 à 6° permet d'améliorer typiquement la réflectance d'une valeur de -30 dB à une valeur de -60 à -65 dB, pouvant être encore accrue par utilisation d'un liquide d'indice. En outre, une coupe biaise limite l'agression mécanique de la fibre lors de son introduction dans un bornierou un connecteur, permettant ainsi d'accroître le nombre maximum autorisé de manoeuvres de connexion/déconnexion.

Concernant ce dernier point, on notera que les diverses techniques qui ont été proposées jusqu'à présent pour réaliser des coupes biaises (décalage axial des points de maintien de la fibre, ajout d'un effort de torsion aux efforts de traction et/ou de flexion lors du clivage, etc.) n'ont pas jusqu'à présent permis de réaliser des coupes biaises précises et de bonne qualité par des moyens simples - au contraire de la présente invention, comme on le verra.

A cet effet, l'invention propose un procédé de clivage consistant à : (b) bloquer la fibre par serrage radial entre deux points de maintien ; (c) appliquer, en chacun de deux points d'appui situés d'un même côté de la fibre dans la région située entre les deux points de maintien, un premier effort de poussée radiale propre à déformer la fibre entre les deux points de maintien et la contraindre en flexion autour de chacun des deux points d'appui et, corrélativement, en traction entre ces deux points ; (d) appliquer localement, en un point de contre-appui situé dans la région située entre les deux points d'appui et du côté diamétralement opposé à ces derniers, un second effort de poussée radiale propre à déformer la fibre en contre-flexion entre les deux points d'appui et produire ainsi dans la section de la fibre située au droit du point de contre-appui, par composition des contraintes de traction et de contre-flexion, un profil de contrainte croissant depuis une contrainte minimale du côté du point de contre-appui jusqu'à une contrainte maximale du côté diamétralement opposé ; et (e) accroître ce second effort jusqu'à ce que ladite contrainte maximale atteigne la limite de rupture élastique du matériau de la fibre, et provoquer ainsi en cet endroit un déchirement de la fibre propre à amorcer, par propagation diamétrale, le clivage de cette dernière.

De préférence, préalablement à l'étape (b), on prévoit une étape consistant à : (a) exercer sur la fibre une tension axiale préalable de maintien, la contrainte de traction externe correspondante étant notablement inférieure à la contrainte de traction interne résultant de l'exécution de l'étape (c).

L'invention a également pour objet un dispositif pour la mise en oeuvre du procédé précité, caractérisé par : des moyens de blocage de la fibre, propres à exercer un serrage radial entre deux points de maintien ; des premiers moyens d'appui, pour appliquer, en chacun de deux points d'appui situés d'un même côté de la fibre dans la région située entre les deux points de maintien, un premier effort de poussée radiale propre à déformer la fibre en flexion entre les deux points de maintien ; des seconds moyens d'appui, pour appliquer localement, en un point de contre-appui situé dans la région située entre les deux points d'appui et du côté diamétralement opposé à ces derniers, un second effort de poussée radiale propre à déformer la fibre en contre-flexion entre les deux points d'appui jusqu'à provoquer, à l'opposé du point de contre-appui, un déchirement de la fibre propre à amorcer, par propagation diamétrale, le clivage de cette dernière.

Si on le souhaite, pour produire un plan de clivage biais par rapport au plan radial de la fibre au point de clivage, il est possible soit de prévoir que les seconds moyens d'appui comprennent une arête s'étendant approximativement selon une direction perpendiculaire à l'axe de la fibre, mais formant un angle par rapport cette direction, soit que les points d'appui des premiers moyens d'appui sont situés à des distances radiales différentes de la droite joignant les deux points de blocage.

Ce dispositif peut être réalisé sous forme d'un outil dans lequel les premiers moyens d'appui sont portés par une première mâchoire et les seconds moyens d'appui sont portés par une seconde mâchoire, ces deux mâchoires portant les moyens de blocage de la fibre et étant mobiles entre elles de manière à produire, par rapprochement, lesdits premier et second efforts de poussée radiale. Avantageusement, pourfor- mer un outil autonome en forme de pince, les deux mâchoires sont mobiles entre elles à pivotement autour d'un axe de rotation situé au-delà de l'un des points de maintien.

De préférence, il est en outre prévu des moyens tendeurs externes, pour exercer sur la fibre une tension axiale préalable de maintien exercée entre les points de maintien.

Il est également possible de prévoir des moyens tendeurs internes, pour exercer sur la fibre un effort complémentaire de poussée radiale, appliqué entre un point de maintien et le point d'appui adjacent.

Enfin, dans un mode de réalisation avantageux, le dispositif comprend en outre un réceptacle propre à recevoir une fiche de connecteur portant la terminaison de fibre à cliver.

D'autres caractéristiques et avantages de l'invention apparaîtront à la lecture de la description détaillée ci-dessous, faite en référence aux dessins annexés.
Les figures 1 a et 1 b, précitées, illustrent une première technique connue de clivage d'une fibre.
Les figures 2a et 2b, précitées, illustrent une deuxième technique connue de clivage d'une fibre.
Les figures 3a et 3b, précitées, illustrent une troisième technique connue de clivage d'une fibre.
Les figures 4a à 4c illustrent les étapes successives du procédé de clivage selon l'invention.
La figure 5 illustre le profil de contrainte au sein du matériau de la fibre lorsque celle-ci se trouve sollicitée de la manière illustrée 4c.
Les figures 6a et 6b sont des vues de dessus montrant la manière de réaliser, respectivement, une coupe droite ou une coupe biaise.La figure 7 illustre une variante technique permettant de réaliser d'une autre manière une coupe biaise.Les figures 8, 9 et 10 illustrent les états de surface obtenus, respectivement, par mise en oeuvre des trois procédés connus illustrés en référence aux figures 1, 2 et 3.
Les figures 11 a et 11 b sont homologues des figures 8 à 10 pour le procédé de l'invention, respectivement dans le cas d'une coupe droite et dans le cas d'une coupe biaise.
La figure 12 est une vue de côté, en coupe selon la ligne XII-XII de la figure 14, d'une pince à diver permettant la mise en oeuvre du procédé de l'invention.
La figure 13 est une vue de face d'un détail montrant la manière dont la fibre est retenue dans la pince avant clivage.
La figure 14 est une vue en coupe, selon la ligne XIV-XIV de la figure 12, de cette même pince à cliver.
La figure 15 est une vue perspective d'une fiche portant l'extrémité de fibres à cliver, utilisée en combinaison avec la pince à cliver des figures 12 et 14.
La figure 16 est une vue agrandie de la partie centrale de la figure 12, montrant plus en détail les moyens de clivage proprement dits.

Sur les figures 4a à 4c, on a illustré schématiquement la mise en oeuvre du procédé de l'invention.

Conformément à ce procédé, la fibre 1 est immobilisée en place entre deux points de maintien 2. On approche alors de celle-ci un étrier tenseur 17 présentant, face à la fibre, une région concave définie entre deux formes proéminentes 18.

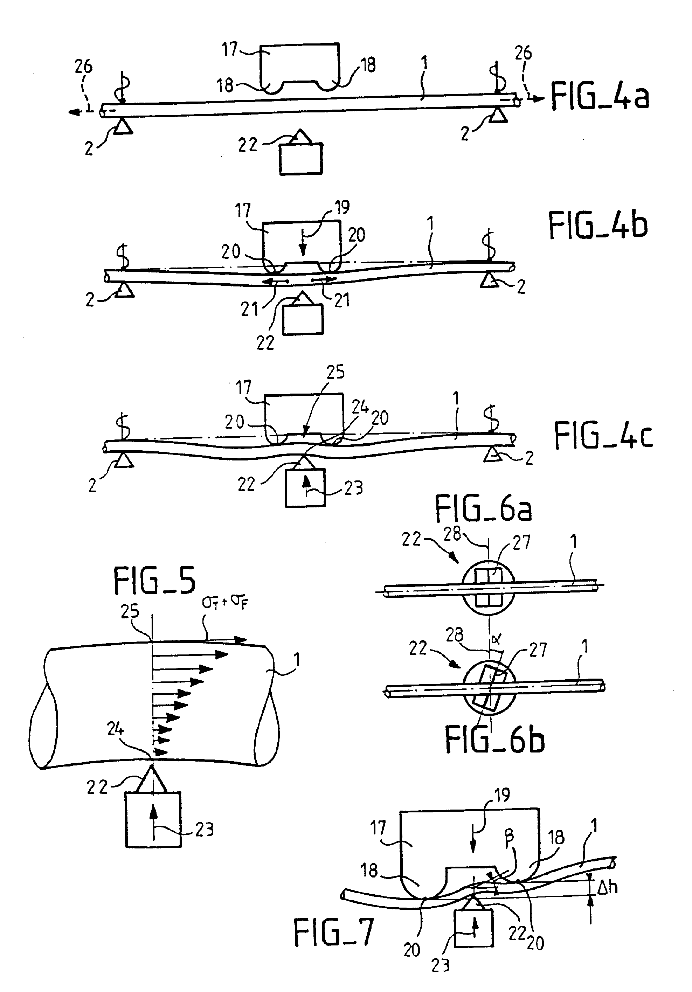

Cet étrier 17 est alors abaissé (flèche 19, figure 4b), de manière à déformer la fibre en flexion radiale et, de façon concomitante, produire entre les deux points d'appui 20 des parties proéminentes 18 un effort de traction, illustré par les flèches 21. Dans l'état ainsi illustré figure 4b, l'état de contrainte de la fibre entre les points d'appui 20 est, localement, essentiellement une contrainte de traction. On notera que cette traction est, dans le cas de l'invention, générée directement au sein de la fibre, sans sollicitation externe aux points de maintien (à la différence des seconde et troisième techniques connues précitées) et essentiellement, à ce stade du procédé, sans contrainte de flexion additionnelle, ceci grâce à la forme concave de l'étrier 17 (et à la différence du galbe convexe 11 utilisé dans la seconde technique précitée de l'art antérieur. La flexion n'intervient en effet que localement, autour des points d'appui 20, et non dans la région centrale, où la courbure de la fibre est pratiquement nulle.

On va alors (figure 4c) générer au point médian entre les points d'appui 20 un effort de flexion au moyen d'une arête ou lame 22 présentée dans la région diamétralement opposée à l'étrier 17 et déplacée (flèche 23) en direction de cet étrier 17.

L'état de contrainte produit par cette flexion, surajoutée à la traction interne réalisée à l'étape 4b dans la zone située entre les points d'appui 20, est illustré plus en détail figure 5 : au point de contact 24 de l'arête 22 avec la fibre 1, la contrainte résultante e_{T} + e_{F} est minimale et augmente au fur et à mesure que l'on se rapproche du point diamétralement opposé 25.

On voit que cette situation est exactement inverse de celle illustrée figure 2b à propos de la seconde technique connue précitée, où le couteau 3 attaquait dans la zone de contrainte maximale. Dans l'invention, au contraire, il n'y a à la zone de contrainte maximale (point 25) aucune autre sollicitation mécanique que la contrainte interne au sein du matériau de la fibre.En accroissant la pression exercée par la lame 22, on accroît la contrainte maximale au point 25, et cette valeurva finir par dépasser la limite de déformation élastique. Une déchirure va alors s'amorcer, à partir de ce point 25, et se propager diamétralement dans le plan perpendiculaire à l'axe moyen de la fibre.

On notera que, à la différence des seconde et troisième techniques connues précitées où la fracture s'amorçait à l'endroit du contact physique avec le couteau, dans le cas de l'invention la déchirure se fait à partir d'un point (point 25) libre de tout contact, et situé à l'opposé de la lame. En d'autres termes, la "lame" 22 ne sert que d'appui, elle n'entaille pas la fibre.

La lame 22 n'est d'ailleurs pas nécessairement en un matériau dur tel que le diamant, qui aurait d'ailleurs l'inconvénient d'entailler légèrement la fibre et de laisser une trace après fracture. On préfère, avantageusement, réaliser la lame par exemple en acier inoxydable ou en céramique, matériaux qui ne blesseront pas la fibre.

De préférence, pour permettre un positionnement satisfaisant de la fibre par rapport à l'étrier et à l'arête, on exerce de l'extérieur, aux points de maintien 2, une légère prétension axiale (flèches 26 de la figure 4a). Toutefois, on notera que cette prétension externe ne participe en aucune façon à la réalisation de l'état de contrainte nécessaire au clivage de la fibre, et que sa valeur (typiquement de l'ordre de 0,2 N) est très inférieure aux efforts de tension nécessaires dans la seconde et la troisième techniques connues précitées, où la valeur typique de la tension nécessaire est de l'ordre de 2 à 3 N, soit dix à quinze fois plus élevée que la prétension opérée dans le cas de l'invention. C'est en ce sens que l'on dira qu'il n'y a "essentiellement" pas de traction externe exercée sur la fibre pour la mise en oeuvre du procédé de l'invention, la contrainte de traction sT présente à l'endroit du clivage étant générée uniquement entre les deux parties proéminentes 18 de l'étrier.

On a jusqu'à présent considéré une coupe droite, correspondant à la configuration de la figure 6a, c'est-à-dire où l'arête 27 de la lame 22 est située exactement dans le plan 28 perpendiculaire à l'axe médian de la fibre.

Le procédé de l'invention se prête cependant particulièrement bien à la réalisation simple et précise de coupes biaises.

Une première possibilité consiste, à cet effet, à incliner très légèrement l'arête 27 de la lame 22 par rapport au plan perpendiculaire 28, d'un angle a correspondant au biais du plan de clivage que l'on souhaite obtenir (figure 6b). On obtient ainsi un "biais latéral" symétrique, c'est-à-dire qui sera dans le même sens pour deux extrémités de fibres que l'on aura clivées de la même manière et que l'on viendra mettre bout à bout dans un connecteur.

Une seconde possibilité, illustrée figure 7, consiste à utiliser un étrier 17 présentant des parties proéminentes 18 dissymétriques, légèrement décalées en direction radiale d'une dimension Aₕ ; les efforts appliqués à l'étrier 17 et à la lame 22 étant, en revanche, toujours orientés dans le plan perpendiculaire à l'axe médian de la fibre (flèches 19 et 23). Cette seconde manière donne un "biais vertical" dissymétrique de sorte que, si l'on souhaiter abouter deux extrémités de fibre clivées par le même dispositif, il sera nécessaire, pour que les deux biais soient dans le même sens et que les fibres puissent se raccorder, de retourner l'étrier 17 à chaque opération de manière à permuter les deux parties proéminentes dissymétriques 18 (gauche/droite sur la figure et vice versa), cette opération pouvant être réalisée par un simple retournement mécanique.

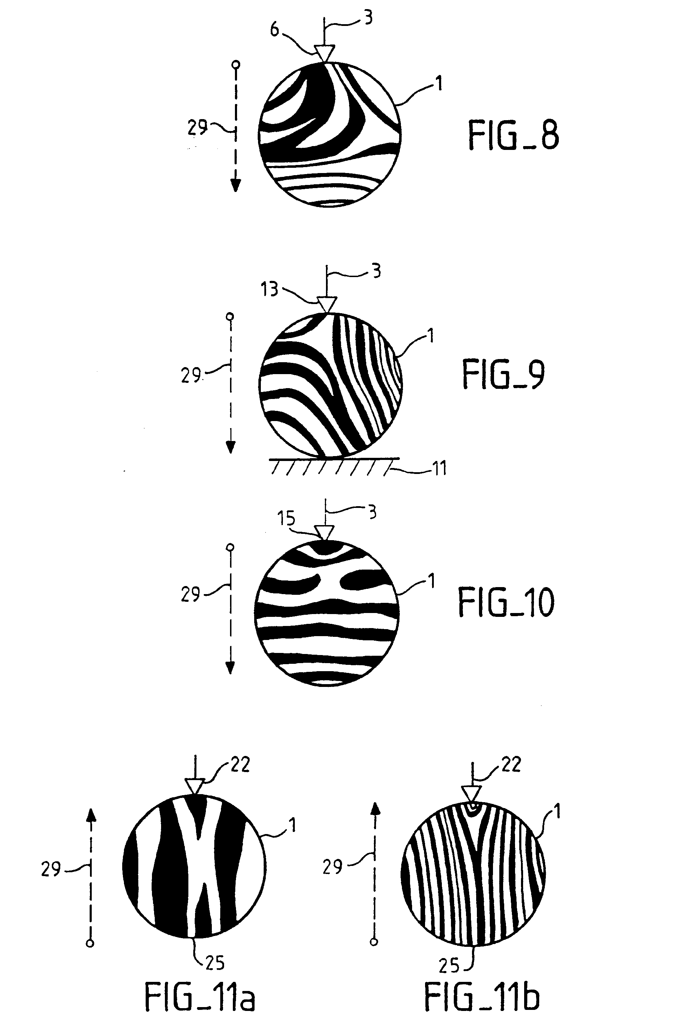

Les figures 8, 9, 10, 11 a et 11 b sont des résultats comparatifs des différentes techniques qui montrent l'état de surface de la terminaison de fibre, analysé par interférométrie optique. Sur ces figures, la planéité est d'autant meilleure que le nombre de franges d'interférence est faible et que ces franges sont régulières, un défaut de planéité de 1° correspondant à environ douze à quatorze franges d'interférence.

La figure 8 illustre le résultat de la première technique connue précitée, illustrée figures 1a et 1b, c'est-à-dire la technique "score-and-break". On voit que la planéité du clivage est fortement affectée à partir du point 6 où le couteau 3 a produit l'entaille, ce défaut s'atténuant au fur et à mesure de la propagation diamétrale de la rupture (sur cette figure et sur les suivantes, la flèche 29 indique la direction de propagation de la rupture). Le défaut maximal de planéité est de l'ordre de 1 °.

La figure 9 correspond à la seconde technique connue précitée, illustrée figures 2a et 2b. Ici encore, l'état de surface est assez médiocre, avec un défaut maximal de planéité supérieur 1°.

La figure 10 correspond à la troisième technique connue précitée, illustrée figures 3a et 3b : on voit que cette technique, qui requiert toutefois une mise en oeuvre beaucoup plus délicate, assure une meilleure qualité de clivage, avec un défaut de planéité maximal inférieur 1°.

La figure 11 a montre le résultat obtenu par mise en oeuvre de l'invention, dans le cas d'une coupe droite : on peut voir que le défaut de planéité est inférieur à 0,5°, résultat notablement meilleur que ce qui peut être obtenu avec les techniques connues. En outre, on voit que cette technique ne laisse subsister pratiquement aucune trace de l'amorce de fracture (point 25), à la différence des techniques antérieures où l'on pouvait distinguer très nettement la trace des points 6, 13 et 15 (figures 8, 9 et 10, respectivement) sur le diagramme interférentiel.

La figure 11b montre le résultat obtenu lorsque l'on réalise un clivage avec biais latéral, en utilisant la technique schématisée figure 6b : on a illustré ici le cas d'une coupe biaise d'angle a = 2°, et l'on peut voir que cette inclinaison est extrêmement régulière d'une extrémité à l'autre de la fibre (franges de largeurs et de répartition sensiblement uniformes). On soulignera qu'aucune des trois techniques connues précitées ne permet d'obtenir une telle coupe biaise. L'angle de coupe peut être ainsi réglé aisément et de façon continue à une valeur quelconque comprise, typiquement, entre 0° et 5°.

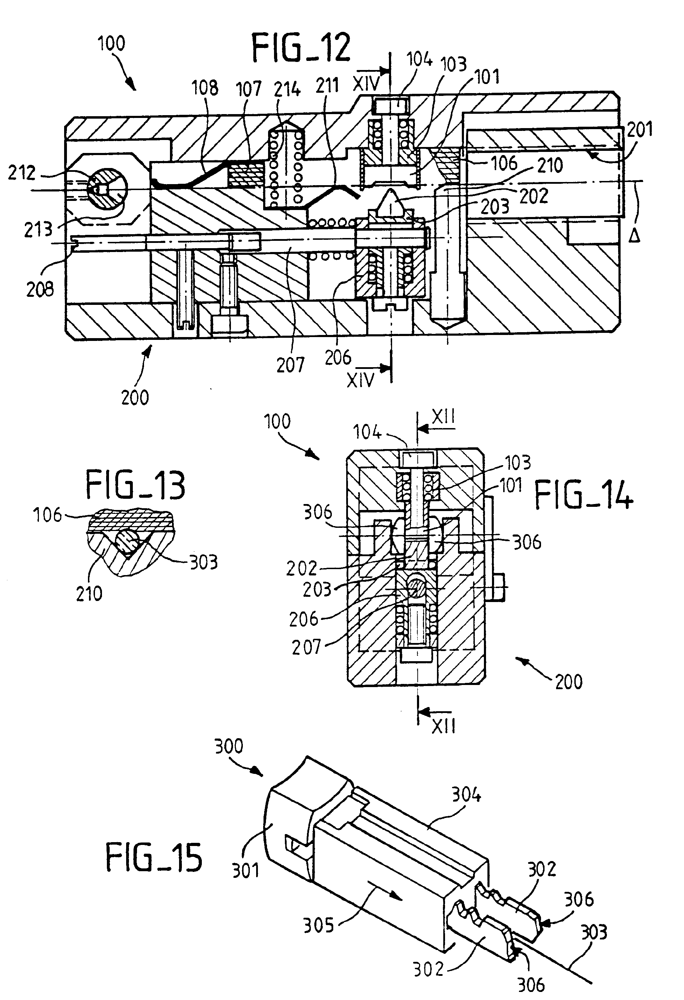

On va maintenant décrire, en référence aux figures 12 à 16, un exemple d'outil à main ou "pince à cliver" permettant la mise en oeuvre du procédé que l'on vient de décrire.

Cet appareil comporte deux mâchoires articulées, à savoir une mâchoire supérieure 100 mobile par rapport à une mâchoire inférieure 200.

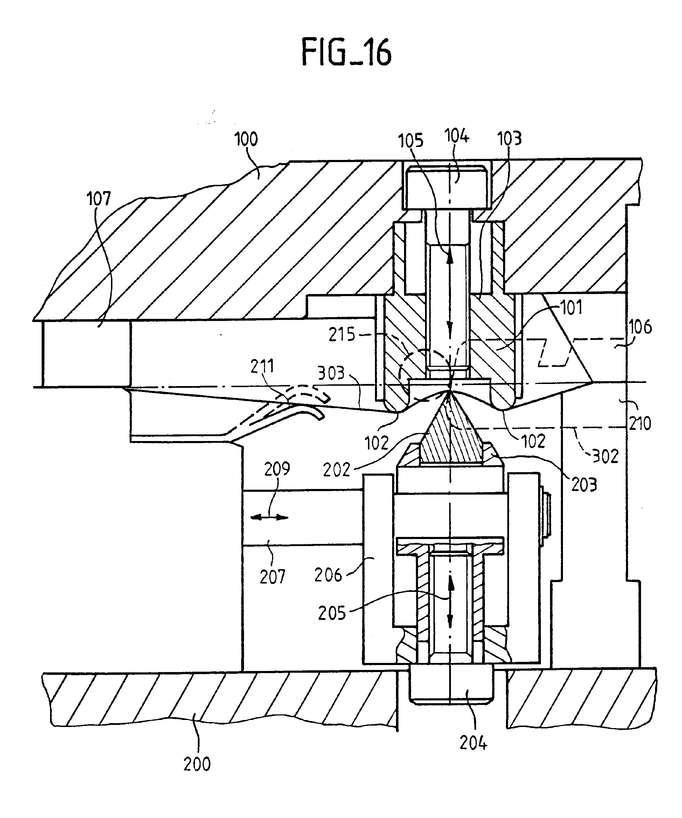

Sur la mâchoire supérieure 100 est monté un étrier 101 présentant les caractéristiques déjà évoquées à propos de l'étrier 17 des figures 4a à 4c, c'est-à-dire comportant deux parties proéminentes 102 (voir notamment la vue agrandie de la figure 16) formant point d'appui pour la fibre à cliver et délimitant entre elles une région concave ne venant pas en contact avec la fibre. Cet étrier est monté sur un support 103 réglable en hauteur au moyen d'un dispositif 104, par exemple un système à vis-écrou permettant un ajustement précis de la position de l'étrier par rapport aux mâchoires de la pince et donc par rapport à l'axe médian A de la fibre (flèche 105).

La mâchoire supérieure 100 porte également un premier patin de maintien 106 situé du côté de l'entrée de la fibre (on expliquera plus bas la manière dont la fibre est mise en place et maintenue). La mâchoire 100 comporte également, du côté opposé, c'est-à-dire du côté de sortie de la fibre, un second patin de maintien supérieur 107. Les patins 106 et 107 ont une structure leur permettant d'être élastiquement déformables, qu'ils soient réalisés en un matériau élastique tel que par exemple un silicone ou qu'il soient constitués d'un presseur rigide sollicité par un ressort (la force de sollicitation typique est de l'ordre de 15 à 20 N).

Il est en outre prévu un dispositif tel qu'une lame ressort 108 assurant la prétension de la fibre (typiquement à une valeur de l'ordre de 0,2 N) au moment de sa mise en place dans la pince, avant que ne débute l'opération de clivage proprement dite.

La mâchoire inférieure 200, quant à elle, comporte un logement 201 formant réceptacle pour une fiche 300 (illustrée isolément figure 15) supportant l'extrémité 303 de la fibre à cliver. La mâchoire porte également une lame 202 en acier, jouant le rôle de la lame 22 illustrée sur les figures 4 à 6. Cette lame est enchâssée dans un support 203 lui-même ajustable en deux directions : d'une part perpendiculairement à l'axe de la fibre par un système à vis 204 (suivant la direction de la flèche 205) et d'autre part parallèlement à l'axe A , le support 203 étant monté sur un étrier 206 solidaire d'une tige 207 permettant, par un système à vis 208, un réglage en direction axiale (flèche 209).

La mâchoire inférieure porte également un support inférieur de fibre 210 coopérant avec le patin supérieur 106, situé en vis-à-vis, de la manière illustrée figure 13 : le patin 106, qui est en matériau élastique, vient presser la fibre nue 303 dans une encoche en forme de V ménagée dans le support 210, assurant ainsi une immobilisation de la fibre dans le sens axial (la combinaison des éléments 106 et 202 joue le rôle du point de maintien 2 de droite des figures 4a à 4c, le point de maintien 2 de gauche de ces mêmes figures correspondant au patin élastique 107 qui vient appuyer contre une surface plane en vis-à-vis de la mâchoire inférieure.

La mâchoire inférieure 200 porte en outre, mais de façon facultative, une lame élastique 211 jouant le rôle de tendeur, dont on précisera le rôle par la suite.

Les deux mâchoires sont reliées et articulées par un axe 212 situé du côté de la sortie de fibre ; cet axe est percé d'un orifice 213 par lequel passe la terminaison de la fibre (terminaison qui sera perdue après clivage).

Enfin, un ressort 214 vient solliciter les deux mâchoires 100, 200 dans le sens de l'écartement.

Très avantageusement, la pince est conçue pour recevoir dans le réceptacle 201 une fiche 300 telle que celle illustrée figure 15, qui est d'un type décrit dans la demande française 91-15494 du 13 décembre 1991 : la fiche 300 comporte essentiellement un corps 301 prolongé à son extrémité par les deux branches 302 d'une fourche entre lesquelles émerge la terminaison de fibre 303. Un capot coulissant rétractable 304 peut être déplacé (flèche 305) pour couvrir les branches 302 et protéger ainsi de tout contact l'extrémité de fibre. Avant clivage, la fibre 303 dépasse de 3 à 5 cm du connecteur, de manière qu'elle puisse s'étendre sur toute la longueur de la pince entre les deux mâchoires et sorte de la pince par l'orifice 213 de l'axe 212.

Lors de l'introduction de la fiche 300 dans le réceptacle 201 de la pince à cliver, le capot 304 est repoussé vers l'arrière et, dans ce mouvement d'effacement, laisse apparaître l'extrémité de fibre, que l'opérateur fait glisser le long de la mâchoire inférieure jusqu'à traverser l'orifice 213. Le positionnement exact se fait lorsque la face antérieure 306 de la branche 302 vient en contact avec une butée 215 (figure 16), permettant d'assurer ainsi un positionnement extrêmement précis du point où interviendra le clivage par rapport à la fiche du connecteur.

La fermeture progressive des mâchoires définit une chaîne cinématique comportant les étapes que l'on va maintenant décrire.

En premier lieu, la fibre est mise en tension entre la fiche et la lame 108 de prétension, qui vient se trouver sollicitée en flexion.

La poursuite du mouvement provoque le pincement de la fibre par les patins 106 et 107, assurant ainsi son maintien dans la configuration schématique de la figure 4a.

Toujours en continuant le mouvement de rapprochement des mâchoires, l'étrier 101 vient en contact avec la fibre, la sollicitant ainsi de la manière décrite plus haut et illustrée figure 4b. On notera à ce stade que la présence du tendeur optionnel 211 permet de donner à la fibre un état de flexion symétrique par rapport au centre de l'étrier, et de diminuer ainsi la longueur d'ensemble de l'outil ; en d'autres termes, la présence de ce tendeur 211 permet de compenser le fait que les patins 106 et 107 définissant les points de maintien ne sont pas symétriques par rapport aux points d'appui 102 de l'étrier.

Enfin, la lame 202 vient en contact avec la fibre et lui imprime une contre-courbure (configuration des figures 4c et 16), accentuée jusqu'à amorcer le déchirement de la fibre au milieu de l'étrier.

Une fois le clivage effectué, on retire la fiche du réceptacle 201, celle-ci étant en position déprotégée, c'est-à-dire avec le capot 304 dans la position illustrée figure 15, il est possible de contrôler la conformité du clivage. On remet alors le capot protecteur 304 afin que celui-ci vienne occulter les branches 302 et l'extrémité de fibre clivée située entre ses branches.

On notera que, contrairement au second procédé connu précité, qui faisait intervenir un galbe convexe, le début de la fracture intervient au maximum de champ de contrainte de la fibre (fonctionnement en cambrure inverse). De ce fait, le procédé de l'invention autorise une plus grande latitude de positionnement de l'étrier 101 par rapport à la lame 202 - et ceci à la différence des première et seconde techniques antérieures précitées, où le point d'impact devait être ajusté avec une très grande précision. En particulier, l'état de contrainte étant sensiblement uniforme sur une longueur assez importante, il est possible, par les éléments 207 et 208, de régler la position longitudinale précise du point de clivage par déplacement de la seule lame 202, sans pour autant modifier les caractéristiques et la qualité du clivage obtenu.

On notera en outre que, toujours par rapport à ce second procédé connu, il y a véritablement déchirement de la fibre, et non fracture sous l'effet d'un choc, ce qui permet d'avoir une qualité de clivage jusqu'à présent inégalée.

Enfin, le procédé de l'invention permet de réaliser des clivages d'excellente qualité sur des fibres présentant des rapports diamètre de coeur/diamètre de gaine (cladding) très variables. Ainsi, pour les fibres monomode, ce rapport est typiquement de 4 µm/125µm ou 9 wm/125 µm, ce qui ne pose pas trop de problème de mise en oeuvre avec les outils à percussion connus, un éclat éventuel ne créant pas de difficulté du point de vue optique, mais seulement sur le plan mécanique. En revanche, avec des fibres mul- timode, ce rapport est typiquement de 100 wm/140 µm, 200 wm/230 µm ou 200 µm/280 µm, donc avec une marge bien inférieure entre diamètre de coeur et diamètre de gaine : de ce fait, avec un outil à percussion une dégradation de la qualité optique du clivage se produit dès la pénétration du couteau, donc de façon systématique. Le procédé de l'invention, qui ne blesse pas de la fibre, permet d'obtenir un clivage pratiquement dépourvu de ce défaut.

Si l'on souhaite réaliser un clivage présentant un biais latéral, il est très aisé, au moyen d'un outil approprié, de déplacer la lame 202 dans le support 203 où elle se trouve enchâssée de manière à lui donner l'inclinaison voulue illustrée figure 6b. Il suffit pour cela de monter à ajustement serré la lame 202 dans son support 203.

Diverses variantes de cette pince peuvent être bien entendu envisagées, parmi lesquelles on peut citer :
- la réalisation non pas sous forme d'une pince mais sous forme d'un outil de table, avec une structure comparable mais dans laquelle les deux mâchoires 100 et 200, au lieu d'être rapprochées par pivotement, le sont par translation relative (version "machine à cliver"). Dans ce cas, on perd l'avantage de l'effet de levier, et c'est pourquoi cette variante s'applique principalement à un outil de table. En revanche, bien que la cinématique reste la même, la mise en contact des différents éléments se fait avec moins de difficulté, les patins ayant notamment moins tendance à blesser la fibre que dans le cas d'un système réalisé sous forme de pince, où les contraintes exercées pour maintenir la fibre sont relativement élevées.
- La réalisation d'une pince susceptible de cliver simultanément une pluralité de fibres, la nappe de fibres étant introduite dans un système comportant un étrier et une lame suffisamment larges pour permettre le clivage simultané de toutes les fibres de la nappe. Dans ce cas, on notera que le clivage des différentes fibres se fait simultanément et de façon totalement indépendante, c'est-à-dire sans aucune interférence entre fibres voisines de la nappe.
- L'utilisation d'un étrier dissymétrique tel que celui illustré figure 7, en remplacement de l'étrier symétrique 101 de la figure 12; dans ce cas, le montage sous forme de pince permet un retournement aisé de cet étrier, selon la technique exposée plus haut.

## Revendications

1. Un procédé de clivage d'une fibre optique, caractérisé par les étapes consistant à :
(b) bloquer la fibre (1) par serrage radial entre deux points de maintien (2),
(c) appliquer, en chacun de deux points d'appui (20) situés d'un même côté de la fibre dans la région située entre les deux points de maintien, un premier effort de poussée radiale (19) propre à déformer la fibre entre les deux points de maintien et la contraindre en flexion autour de chacun des deux points d'appui et, corrélativement, en traction (21) entre ces deux points,
(d) appliquer localement, en un point de contre-appui (24) situé dans la région située entre les deux points d'appui et du côté diamétralement opposé à ces derniers, un second effort de poussée radiale (23) propre à déformer la fibre en contre-flexion entre les deux points d'appui et produire ainsi dans la section de la fibre située au droit du point de contre-appui, par composition des contraintes de traction (e_{T}) et de contre-flexion (e_{F}), un profil de contrainte croissant depuis une contrainte minimale du côté du point de contre-appuijus- qu'à une contrainte maximale du côté diamétralement opposé, et
(e) accroître ce second effort jusqu'à ce que ladite contrainte maximale atteigne la limite de rupture élastique du matériau de la fibre, et provoquer ainsi en cet endroit (25) un déchirement de la fibre propre à amorcer, par propagation diamétrale, le clivage de cette dernière.

2. Le procédé de la revendication 1 dans lequel, préalablement à l'étape (b), on prévoit une étape consistant à :
(a) exercer sur la fibre une tension axiale (26) préalable de maintien, la contrainte de traction externe correspondante étant notablement inférieure à la contrainte de traction interne résultant de l'exécution de l'étape (c).

3. Un dispositif pour la mise en oeuvre du procédé de la revendication 1, caractérisé par:
- des moyens de blocage de la fibre, propres à exercer un serrage radial entre deux points de maintien,
- des premiers moyens d'appui, pour appliquer, en chacun de deux points d'appui (20) situés d'un même côté de la fibre dans la région située entre les deux points de maintien, un premier effort de poussée radiale (19) propre à déformer la fibre en flexion entre les deux points de maintien,
- des seconds moyens d'appui, pour appliquer localement, en un point de contre-appui (24) situé dans la région située entre les deux points d'appui et du côté diamétralement opposé à ces derniers, un second effort de poussée radiale (23) propre à déformer la fibre en contre-flexion entre les deux points d'appui jusqu'à provoquer, à l'opposé du point de contre-appui, un déchirement de la fibre propre à amorcer, par propagation diamétrale, le clivage de cette dernière.

4. Le dispositif de la revendication 3 dans lequel les seconds moyens d'appui comprennent une arête (27) s'étendant approximativement selon une direction (28) perpendiculaire à l'axe de la fibre, mais formant un angle (a) par rapport cette direction, de manière à produire un plan de clivage biais par rapport au plan radial de la fibre au point de clivage.

5. Le dispositif de la revendication 3 dans lequel les points d'appui des premiers moyens d'appui sont situés à des distances radiales différentes (Ah) de la droite joignant les deux points de blocage, de manière à incliner entre ces deux points d'appui l'axe moyen de la fibre d'un angle (p) permettant de produire un plan de clivage biais par rapport au plan radial de la fibre au point de clivage.

6. Le dispositif de la revendication 3 dans lequel les premiers moyens d'appui (101) sont portés par une première mâchoire (100) et les seconds moyens d'appui (202) sont portés par une seconde mâchoire (200), ces deux mâchoires portant les moyens de blocage de la fibre (106, 107, 202) et étant mobiles entre elles de manière à produire, par rapprochement, lesdits premier et second efforts de poussée radiale.

7. Le dispositif de la revendication 6 dans lequel les deux mâchoires sont mobiles entre elles à pivotement autour d'un axe de rotation (212) situé au-delà de l'un des points de maintien, de manière à former un outil autonome en forme de pince.

8. Le dispositif de la revendication 3, comprenant en outre des moyens tendeurs externes (108), pour exercer sur la fibre une tension axiale préalable de maintien exercée entre les points de maintien.

9. Le dispositif de la revendication 3, comprenant en outre des moyens tendeurs internes (211), pour exercer sur la fibre un effort complémentaire de poussée radiale, appliqué entre un point de maintien et le point d'appui adjacent.

10. Le dispositif de la revendication 3, comprenant en outre un réceptacle (201) propre à recevoir une fiche de connecteur portant la terminaison de fibre à cliver.
